# EUROPÄISCHE PATENTSCHRIFT

(11) **EP 0 906 155 B1**
(45) Veröffentlichungstag und Bekanntmachung des Hinweises auf die Patenterteilung: **22.10.2003**
(21) Anmeldenummer: 97928112.8
(22) Anmeldetag: 09.06.1997
(51) Int. Cl.: B01J 37/34, B01J 37/08

(54) **VERFAHREN ZUR HERSTELLUNG EINES KATALYSATORS**
PROCESS FOR MANUFACTURING A CATALYST
PROCEDE DE FABRICATION D'UN CATALYSEUR

(30) Priorität: 21.06.1996 DE 19624923
(43) Veröffentlichungstag der Anmeldung: 07.04.1999
(73) Patentinhaber: SIEMENS AKTIENGESELLSCHAFT, 80333 München (DE); Cluster Corporation Ltd., St. Petersburg, 199026 (RU)
(72) Erfinder: HUMS, Erich, D-91093 Hessdorf (DE); KHINSKY, Alexander, St.Petersburg, 198152 (RU)
(74) Vertreter: Tergau & Pohl Patentanwälte
(86) Internationale Anmeldenummer: DE9701161
(87) Internationale Veröffentlichungsnummer: WO97049491

(56) Entgegenhaltungen:
- US-A- 3 271 326
- US-A- 5 204 302

## Beschreibung

Die Erfindung betrifft ein Verfahren zur Herstellung eines Katalysators mit einer katalytisch aktiven Masse auf einem Tragkörper durch thermisches Spritzen sowie einen danach gefertigten Katalysator.

Aus der US 3 271 326 ist ein im wesentlichen nickelhaltiger Katalysator bekannt, bei dem die katalytisch aktive Oberfläche durch Flammspritzen aufgetragen wird. Hierbei wird in einem ersten Arbeitsgang auf eine zuvor mechanisch aufgerauhte stählerne Tragstruktur zur weiteren Aufrauhung Aluminium flammgespritzt. Danach werden in einem zweiten Arbeitsgang die katalytisch aktiven Komponenten durch Flammspritzen auf die so vorbehandelte Tragstruktur aufgetragen. Eigenart dieses aufwendigen Herstellungsverfahrens ist es, daß die aufgespritzten katalytisch aktiven Komponenten bis zu ihrer Schmelztemperatur aufgeheizt werden.

Desweiteren ist es aus der DE 38 13 312 A1 bekannt, ein mit katalytisch aktiven Komponenten als Zuschlägen modifiziertes Titandioxid durch thermisches Spritzen auf eine metallische Struktur aufzutragen. Dabei schmelzen die katalytisch aktiven Komponenten kurzfristig auf und verschmelzen beim Abkühlen an den Berührungsstellen miteinander. Auf diese Weise wird eine durch Adhäsionskräfte gehaltene, katalytisch aktive Oberfläche geschaffen.

Jedoch ist bekannt, daß die katalytische Aktivität des Titandioxids sehr stark von dem Anteil des Titandioxids abhängt, welcher in der Anatas-Modifikation vorliegt. Die Anatas-Modifikation des Titandioxids hat dabei die Eigenschaft, sich begünstigt durch höhere Temperaturen irreversibel in die weniger aktive Rutil-Modifikation umzuwandeln. Keime von Titanoxid in der Rutil-Modifikation im Kristallgefüge wachsen bei Wärmezufuhr weiter zu Lasten der Anatas-Modifikation.

Aus der DE 39 16 398 A1 ist hierzu bekannt, dem Spritzmaterial, welches eine thermisch empfindliche Komponente wie Titandioxid in der Anatas-Modifikation enthält, eine niedrigstschmelzende Komponente beizumengen. Die Schmelztemperatur der niedrigstschmelzenden Komponente liegt dabei unterhalb einer Inaktivierungstemperatur, oberhalb derer sich, beeinflußt durch z.B. eine chemische Veränderung, die thermisch empfindliche Komponente irreversibel verringert. Während des thermischen Spritzens wird das Spritzmaterial lediglich bis zur Schmelztemperatur der niedrigstschmelzenden Komponente erwärmt, wodurch eine Inaktivierung der thermisch empfindlichen Komponente vermieden wird. Die Haftung der Komponenten des Spritzmaterials untereinander geschieht durch Umfließen und Verschmelzen der niedrigstschmelzenden Komponente während des thermischen Spritzens. Auf diese Weise läßt sich auch bei Vorhandensein einer thermisch empfindlichen Komponente durch thermisches Spritzen eine Oberfläche mit einer hohen katalytischen Aktivität erreichen.

Das Umfließen einer katalytisch aktiven Komponente mit einer niedrigstschmelzenden Komponente verringert jedoch die spezifische Oberfläche oder BET-Oberfläche der aufgetragenen Masse. Für eine hohe katalytische Aktivität muß entsprechend die Schichtdicke der aufgetragenen, katalytisch aktiven Masse erhöht werden. Die daraus resultierende längere Spritzdauer kann dann leicht zu einer thermischen Verwerfung des Tragkörpers bzw. der Tragstruktur führen. Das Verfahren ist daher nur für Tragstrukturdicken von mehr als ca. 3 mm geeignet.

Der Erfindung liegt die Aufgabe zugrunde, einen Weg zu weisen, wie durch thermisches Spritzen ein Katalysator mit einer katalytisch aktiven Masse auf einem Tragkörper hergestellt werden kann, ohne daß thermisch empfindliche Komponenten inaktiviert werden und wobei die katalytisch aktive Masse eine gegenüber dem Stand der Technik deutlich erhöhte BET-Oberfläche aufweist.

Die Aufgabe bezüglich des Herstellungsverfahrens für einen Katalysator mit einer katalytisch aktiven Masse auf einem Tragkörper wird erfindungsgemäß dadurch gelöst, daß ein einen reaktiven Vorläufer zumindest einer Komponente der katalytisch aktiven Masse umfassendes Spritzmaterial thermisch auf den Tragkörper gespritzt und der reaktive Vorläufer zur Ausbildung der Komponente umgesetzt wird, wobei als reaktiver Vorläufer ein Titanhydroxid eingesetzt wird.

Die Erfindung geht dabei von der Überlegung aus, gerade entgegen der einschlägigen Meinung eines Fachmanns für das Spritzmaterial nicht die gleiche Zusammensetzung zu wählen wie für die auf den Tragkörper aufzutragende katalytisch aktive Masse. Vielmehr wird für zumindest eine Komponente der katalytisch aktiven Masse im Spritzmaterial ein reaktiver Vorläufer gewählt, welcher zur Ausbildung der Komponente umgesetzt wird, wobei als reaktiver Vorläufer ein Titanhydroxid eingesetzt wird. Auf diese Weise kann beispielsweise für eine thermisch empfindliche Komponente wie Titandioxid die durch eine Temperaturerhöhung während des Spritzvorgangs begünstigte Inaktivierung vermieden werden. Die Komponente wird nämlich erst während oder nach dem Spritzvorgang aus dem reaktiven Vorläufer umgesetzt und kann infolgedessen durch eine vor Umsetzung erfolgte Temperaturerhöhung nicht inaktiviert werden.

Es hat sich gezeigt, daß eine nach dem erfindungsgemäßen Verfahren hergestellte katalytisch aktive Masse eine hohe BET-Oberfläche von 50 bis 70 m²/g aufweist. Umfangreiche Untersuchungen lassen vermuten, daß bei der Umsetzung des reaktiven Vorläufers chemische Verbindungen geknüpft werden, die zur Bildung von untereinander verbundenen Mikrokristalliten führen. Eine derartige Ansammlung von verbundenen Mikrokristalliten weist eine hohe spezifische Oberfläche auf. Durch die hohe BET-Oberfläche bedingt läßt sich die Schichtdicke der katalytisch aktiven Masse gegenüber dem Stand der Technik bei gleich hoher katalytischer Aktivität beträchtlich verringern. Infolge der damit verbundenen kürzeren Spritzdauer eignet sich für das Auftragen der katalytisch aktiven Masse ein Tragkörper mit einer Dicke von weniger als 100 µm, ohne daß es während des Auftragens zu einer thermischen Verwerfung kommt. Mit einer solchen Materialeinsparung können entsprechend die Herstellungskosten gesenkt werden. Als Tragkörper eignet sich ein metallischer oder ein keramischer Körper in beliebiger Form, z.B. in Form einer Platte, eines Bandes, einer Stange oder eines Rohres. Es ist auch vorstellbar, für den Tragkörper ein anderes Material als Metall oder Keramik zu verwenden, solange dieses durch die erhöhte Temperatur während des Spritzvorganges nicht beschädigt werden kann.

Besonders vorteilhaft ist es, wenn die Umsetzung oder chemische Reaktion des reaktiven Vorläufers durch eine thermische Aktivierung während des Spritzens erfolgt. Das Spritzmaterial wird dabei während des thermischen Spritzens bis über eine entsprechende Aktivierungstemperatur, oberhalb derer eine chemische Reaktion des Vorläufers einsetzt, erwärmt.

Die thermische Aktivierung des reaktiven Vorläufers kann aber auch nach erfolgtem Spritzen durch eine Wärmebehandlung der aufgetragenen katalytisch aktiven Masse oder des Tragkörpers bis über die Aktivierungstemperatur erfolgen. Eine derartige Wärmebehandlung kann auch einen Calciniervorgang umfassen.

Als ein durch thermische Aktivierung umsetzbarer reaktiver Vorläufer geeignet ist insbesondere ein thermisch leicht zersetzbares Metallsalz oder eine eine Hydroxygruppe tragende Verbindung (Hydroxyverbindung) eines Metalls. Ein Metallsalz oder eine Ionenverbindung des entsprechenden Metalls läßt sich durch entsprechenden Wärmeeintrag in ein Kation und ein Anion ionisieren. Eine derartige Ionisierung findet beispielsweise in jeder Kerzenflamme statt. Wird die Temperatur während des thermischen Spritzens, worunter hier sowohl Plasma- als auch Flammspritzen verstanden werden soll, entsprechend hoch gewählt, so kann ein freies Metallion mit einem Gasmolekül der umgebenden Atmosphäre reagieren und beispielsweise mit Sauerstoff ein Metalloxid als gewünschte Komponente bilden. Unter einer Hydroxyverbindung eines Metalls soll hier eine noch nicht völlig entwässerte, d.h. noch OH-Gruppen enthaltende Oxidverbindung des Metalls verstanden werden. Derartige Verbindungen lassen sich leicht thermisch unter nötigenfalls auch mehrfacher Abspaltung von Wasser in das entsprechende Oxid überführen. Auf diese Weise kann eine Hydroxyverbindung eines Metalls durch eine entsprechend gewählte Temperatur während des Spritzvorgangs in ein Metalloxid umgesetzt werden.

Besonders vorteilhaft ist es, wenn als Metallsalz ein Oxalat, ein Nitrat oder ein Carbonat eingesetzt wird. Ein derartiges Metallsalz läßt sich besonders leicht, d.h. bei einer Temperatur von weniger als 500 °C, ionisieren.

Als ein reaktiver Vorläufer besonders geeignet ist auch ein Aluminium-Hydroxid, vorzugsweise ein Gibbsit (monoklines γ-Al(OH)₃) oder ein Böhmit (rhombisch kristallines Metahydroxid γ-AlO(OH)), oder ein Titanhydroxid, vorzugsweise ein auch Metatitansäure genanntes Titanmetahydroxid TiO(OH)₂. Sowohl das Aluminiumhydroxid als auch das Titanmetahydroxid lassen sich begünstigt durch höhere Temperaturen leicht in die entsprechende oxidische Form überführen. Das durch die thermische Aktivierung des Titanmetahydroxids TiO(OH)₂ umgesetzte Titandioxid TiO₂ ist ein Hauptbestandteil vieler Katalysatoren. Insbesondere eignet sich ein Titandioxid enthaltender Katalysator besonders zur Entfernung von Stickoxiden mit Hilfe des bekannten DeNOₓ-Verfahrens.

Die durch thermisches Spritzen aufgetragene, katalytisch aktive Masse weist eine besonders hohe BET-Oberfläche auf, wenn ein mehrere reaktive Vorläufer umfassendes Spritzmaterial eingesetzt wird. Beispielsweise können für die katalytisch aktive Komponente Titandioxid TiO₂ als ein reaktiver Vorläufer Titanmetahydroxid TiO(OH)₂, für Aluminiumoxid Al₂O₃ ein Böhmit und/oder ein Gibbsit, und für weitere katalytisch aktive Komponenten ein Oxalat als jeweiliger reaktiver Vorläufer eingesetzt werden. Eine entsprechende Erwärmung des Spritzmaterials während des thermischen Spritzens führt zu einer zunehmenden Wasserabspaltung aus den Hydroxy-Verbindungen. Durch Abspaltung einer OH-Gruppe der Metatitansäure und eines Protons aus dem Aluminiumhydroxid kann leicht ein ternäres Oxid oder Mischoxid von Aluminium und Titan entstehen. Die übrigen reaktiven Vorläufer werden ionisiert und z.B. in einer Sauerstoff enthaltenden Atmosphäre in ihre Oxide übergeführt. Auf diese Weise läßt sich eine katalytisch hoch aktive Masse durch thermisches Spritzen auf einem Tragkörper herstellen.

Wie bereits erwähnt, kann Titandioxid sowohl in einer Rutilals auch in einer Anatas-Modifikation existieren. Gegenüber der Rutil-Modifikation zeigt die Anatas-Modifikation eine deutlich erhöhte katalytische Aktivität. Die Kristallisation der günstigen Modifikation wird bevorzugt, wenn dem Spritzmaterial ein Copräzipitat beigemengt wird. Unter einem Copräzipitat wird eine Ausfällung eines chemischen Elements oder einer chemischen Verbindung in Anwesenheit von Stoffen, die löslich sind, verstanden. Ein Copräzipitat ist demnach eine mit einem anderen Stoff vermischte Ausfällung eines chemischen Elements oder einer chemischen Verbindung. Beispielsweise läßt sich aus einer Lösung, welche Titanylsulfat und Parawolframat enthält, ein mit Wolfram vermischtes Titandioxid gewinnen. Dabei sind die Wolfram-Atome in Zwischengitterplätze des Titandioxids eingebaut. Durch Trocknen und Calcinieren läßt sich daraus ein in der Anatas-Modifikation kristallisiertes Titandioxid gewinnen, wobei die eingelagerten Wolfram-Atome als eine Blockade für die Phasentransformation in die Rutil-Modifikation bewirken. Ein weiteres Copräzipitat ist beispielsweise eine kristalline Mischung aus Metatitansäure und Wolframsäure (TiO(OH)₂/WO(OH)₂). Durch ein derartiges Copräzipitat kann verhindert werden, daß bei der Umsetzung eines reaktiven Vorläufers in eine katalytisch aktive Komponente überhaupt erst eine Phasentransformation in eine ungünstige kristalline Modifikation auftritt.

Für die Herstellung eines Metalloxide enthaltenden Katalysators ist es von Vorteil, wenn das thermische Spritzen in einer Sauerstoff enthaltenden Atmosphäre durchgeführt wird. In diesem Fall verbindet sich ein freies Metallion (durch die Ionisierung eines Salzes entstanden) mit Sauerstoff zu einem Metalloxid.

Besonders vorteilhaft ist es, wenn parallel zum Spritzmaterial ein Metall oder eine Metallegierung gespritzt wird, wobei das Metall oder die Metallegierung und das Spritzmaterial während des Spritzens vor dem Auftreffen auf den Tragkörper innig gemischt werden. Das Metall oder die Metallegierung wirkt dabei, wie eingangs in der Würdigung des Standes der Technik beschrieben, als ein Verbundwerkstoff. Das erweichte Metall bzw. die erweichte Metallegierung umfließt während des Spritzvorgangs die anderen Komponenten und trägt zu deren Haftung aneinander und auf dem Tragkörper bei. Als Metall oder als Metallegierung eignen sich besonders Aluminium und Aluminiumlegierungen.

Für das thermische Spritzen besonders gut handhabbar ist ein Spritzmaterial in Form einer Pulvermischung aus separaten Pulvern mit einer jeweiligen mittleren Korngröße von weniger als 50 µm, vorzugsweise von weniger als 10 µm. Vor dem Spritzvorgang werden die separaten Pulver intensiv vermischt. Das Metall oder die Metallegierung kann ebenso gut gesondert gespritzt werden. Durch die verwendete geringe Korngröße läßt sich eine gute Umsetzung der reaktiven Vorläufer und eine Erhöhung der BET-Oberfläche der aufgebrachten katalytisch aktiven Masse erzielen.

Eine besonders vorteilhafte Ausgestaltung eines gemäß dem erfindungsgemäßen Verfahren hergestellten Katalysators ergibt sich, wenn die katalytisch aktive Masse multinäre Verbindungen beinhaltet. Unter einer multinären Verbindung soll hier eine komplexe oder gemischte Verbindung mehrerer Komponenten der katalytisch aktiven Masse verstanden werden. Eine derartige Verbindung trägt wesentlich zu einer besseren Haftung der einzelnen Komponenten untereinander bei. Wird z.B. als ein erster reaktiver Vorläufer ein Vanadiumoxalat und als ein zweiter reaktiver Vorläufer eine Metatitansäure verwendet, so kann während des thermischen Spritzens in einer Sauerstoff enthaltenden Atmosphäre eine multinäre Verbindung in Form eines gemischten Metalloxids, welches neben Sauerstoff Vanadium und Titan enthält, entstehen.

Besonders vorteilhaft für den Katalysator ist es, wenn die katalytisch aktive Masse eine BET-Oberfläche von 40 bis 100 m²/g, vorzugsweise von 50 bis 70 m²/g, aufweist. Durch eine derart hohe BET-Oberfläche läßt sich auch mit einer geringen Schichtdicke der katalytisch aktiven Masse eine hohe katalytische Aktivität des Katalysators erzielen. Da eine verringerte Schichtdicke der katalytisch aktiven Masse mit einer kürzeren Spritzdauer verknüpft ist, kann auch ein Tragkörper geringer Dicke verwendet werden, ohne daß es beim thermischen Spritzen zu einer Verwerfung des Tragkörpers kommt. Vorteilhafterweise weist der Tragkörper eine Dicke von weniger als 1 mm, vorzugsweise von weniger als 100 µm auf.

Der Tragkörper selbst kann aus einem Metall oder aus einer Keramik bestehen. Der Tragkörper kann dabei eine beliebige Struktur, z.B. in Form einer Platte, eines Bandes, einer Stange oder eines Rohres haben. Der Tragkörper kann auch wabenförmig ausgebildet sein. Besonders vorteilhaft als Material für den Tragkörper ist ein Chrom-Aluminium-Stahl. Mit einem derartigen Tragkörper läßt sich eine hohe Standdauer des Katalysators erzielen.

Für eine bessere Haftung der katalytisch aktiven Masse kann es vorgesehen sein, daß der Tragkörper vor dem Aufbringen der katalytisch aktiven Masse mechanisch oder chemisch aufgerauht ist.

Ausführungsbeispiele der Erfindung werden anhand einer Figur sowie anhand zweier Tabellen näher erläutert. Dabei zeigen:

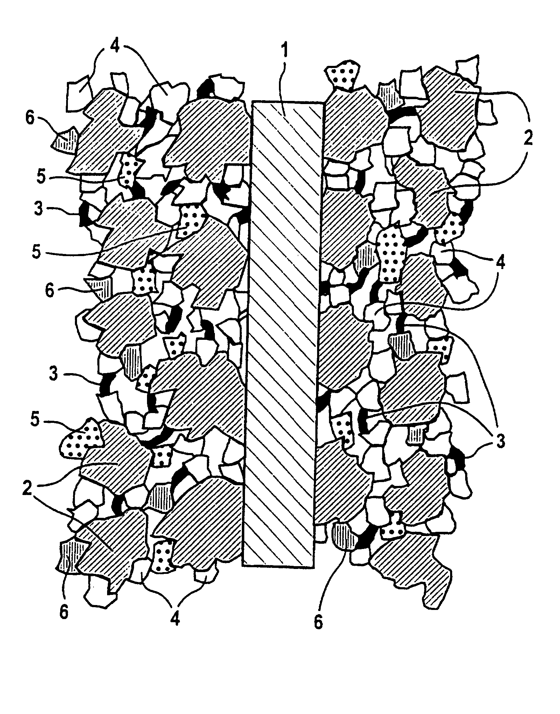

- FIG 1: einen Querschnitt durch den Tragkörper eines erfindungsgemäßen Katalysators und die durch thermisches Spritzen darauf aufgebrachten Komponenten der katalytisch aktiven Masse;
- Tabelle 1: für ein Spritzmaterial zur Herstellung eines DeNOₓ-Katalysators wählbare Komponenten unter Angabe des jeweiligen prozentualen Massenanteils sowie der jeweiligen mittleren Teilchengröße;
- Tabelle 2: vier alternative Zusammensetzungen eines Spritzmaterials zur Herstellung eines DeNOₓ-Katalysators, wobei die aufgeführten Komponenten aus Tabelle 1 entnommen sind.

Für die Ausführungsbeispiele, welche Katalysatoren mit oxidischen katalytisch aktiven Komponenten betreffen, findet das thermische Spritzen unter einer Sauerstoff enthaltenden Atmosphäre statt. Die Temperatur während des thermischen Spritzens ist derart gewählt, daß die thermische Aktivierung des reaktiven Vorläufers bereits vor Auftreffen auf den Tragkörper erfolgt ist. Als abschließender Schritt findet eine Calcinierung der aufgetragenen Masse statt. Auf diese Weise wird eine vollständige Entwässerung erzielt und die endgültige oxidische Struktur der katalytisch aktiven Masse erreicht. Als Spritzmaterial wird stets eine Pulvermischung aus separaten Pulvern der jeweiligen Komponenten verwendet. Die mittleren Teilchengrößen der einzelnen Komponenten des Spritzmaterials lassen sich aus Tabelle 1 entnehmen.

**Tabelle 1**

| Komponente | proz. Massenanteil | mittl. Teilchengröße |
|---|---|---|
| Aluminium | 8.0 % | <30 µm |
| Aluminiumlegierung (AlMg₃) | 8.0 % | <30 µm |
| Böhmit | 26.0 % | <10 µm |
| Gibbsit | 16.5 % | <10 µm |
| Vanadiumoxalat | 4.0 % | <10 µm |
| Wolframoxalat | 3.75 % | <10 µm |
| Copräzipitat (TiO₂/WO₃) | 37.5 % | <1 µm |
| Copräzipitat (TiO(OH)₂/H₂WO₄) | 37.5 % | <1 µm |
| TiO(OH)₂ | 33.75 % | <10 µm |

Tabelle 1 zeigt für ein Spritzmaterial in Form einer Pulvermischung geeignete Komponenten für die Herstellung eines DeNOₓ-Katalysators zum Abbau von Stickoxiden in einem Abgas einer Verbrennungsanlage unter Verwendung eines Reduktionsmittels, wie z.B. Ammoniak.

In Tabelle 2 sind die jeweiligen prozentualen Massenanteile (Spalte 2) und die jeweiligen mittleren Teilchengrößen (Spalte 3) aufgeführt. Es erfolgt eine separate parallele Spritzung des Aluminiums oder einer Aluminiumlegierung, in diesem Fall aus Aluminium und Mangan. Die Mischung mit den übrigen Komponenten erfolgt vor dem Auftreffen auf den Tragkörper. Die übrigen Komponenten werden vor dem thermischen Spritzen zu einem Spritzmaterial vermischt. Als reaktiver Vorläufer für das in einem DeNOₓ-Katalysator katalytisch aktive Titandioxid kann wahlweise eine Metatitansäure oder eine Mischung einer Wolframsäure mit einer Metatitansäure in Form eines Copräzipitats verwendet werden. Als ein solches Copräzipitat kann auch eine getrocknete und calcinierte gemeinsame Fällung von Titan und Wolfram aus einer Titanylsulfat und Parawolframat enthaltenden Lösung verwendet werden. Dieses Copräzipitat weist Titandioxid überwiegend in der katalytisch aktiven Modifikation des Anatas auf, bei der Wolfram in Zwischengitterplätzen eingelagert ist. Die Beimengung bzw. Einlagerung von Wolfram verhindert die Umwandlung von Titandioxid aus der Anatas-Modifikation in die unerwünschte Rutil-Modifikation.

**Tabelle 2**

| Zusammensetzung | Beispiel 1 | Beispiel 2 | Beispiel 3 | Beispiel 4 |
|---|---|---|---|---|
| Aluminium | X | X | X | |
| Aluminiumlegierung | | | | X |
| Böhmit | X | X | X | X |
| Gibbsit | X | X | X | X |
| Vanadiumoxalat | X | X | X | X |
| Wolframoxalat | X | | | |
| Copräzipitat (TiO₂/WO₃) | | | X | |
| Copräzipitat (TiO(OH)₂/H₂WO₄) | | X | | X |
| Metatitansäure (TiO(OH)₂) | X | | | |

Tabelle 2 zeigt vier alternative Möglichkeiten für die Zusammensetzung eines Spritzmaterials zur Herstellung eines DeNOₓ-Katalysators. Der jeweilige prozentuale Massenanteil ist dabei der Tabelle 1 zu entnehmen. Es wird jeweils Aluminium (Beispiel 1 bis Beispiel 3) bzw. eine Aluminiumlegierung aus Aluminium und Mangan, herkömmlich bezeichnet als AlMg₃ (Beispiel 4), parallel zu einer Mischung der übrigen Komponenten gespritzt. Die thermische Aktivierung der reaktiven Vorläufer (in diesem Fall sind dies: Böhmit, Gibbsit, Vanadiumoxalat, Wolframoxalat, Metatitansäure und das aus einer Mischung von Wolframsäure und Metatitansäure bestehende Copräzipitat) erfolgt während des thermischen Spritzens. Die aufgetragene Masse wird einem Calcinierungsvorgang unterzogen, um eine endgültige Entwässerung und die katalytisch aktive oxidische Struktur der aufgetragenen Masse zu erzielen. Sämtliche nach den Beispielen 1 bis 4 hergestellten katalytisch aktiven Massen zeigen eine BET-Oberfläche von 60 bis 70 m²/g.

Durch eine Röntgenstrukturanalyse wird der Vorteil des erfindungsgemäßen Verfahrens nachgewiesen. Wird für die katalytisch aktive Komponente Titandioxid ein reaktiver Vorläufer in Gestalt der Metatitansäure bzw. des Metatitansäure enthaltenden Copräzipitats eingesetzt, so findet sich Titandioxid in der katalytisch aktiven Masse überwiegend in der Anatas-Modifikation wieder. Die thermische Inaktivierung der Anatas-Modifikation durch Umwandlung in die Rutil-Modifikation kann wirkungsvoll umgangen werden, da der reaktive Vorläufer primär in Titandioxid der Anatas-Modifikation umgesetzt wird. Eine Phasentransformation in die Rutil-Modifikation findet nicht statt. Dies ist im übrigen anders, wenn für das Spritzmaterial ein Titandioxid mit an Zwischengitterplätzen eingelagertem Wolfram eingesetzt wird. Ein derartiges Copräzipitat stellt keinen reaktiven Vorläufer im Sinne des erfindungsgemäßen Verfahrens dar. Es findet keine Umsetzung statt.

Figur 1 zeigt einen Querschnitt durch einen nach Beispiel 1 hergestellten Katalysator zum Abbau von Stickoxiden nach dem DeNOₓ-Verfahren. Der Tragkörper 1 ist ein Chrom-Aluminium-Stahl in Form einer Platte mit einer Dicke von 40 µm. Die katalytisch aktive Masse 10 ist beidseitig durch thermisches Spritzen aufgetragen. Die Oberfläche des Tragkörpers 1 ist in Figur 1 nicht näher ausgestaltet, sie kann aber z.B. durch eine mechanische oder chemische Behandlung aufgerauht sein. Durch die Verformung beim Aufprall haftet das Alumiumoxid 2 durch Adhäsionskräfte auf dem Tragkörper 1. Das parallel gespritzte Aluminium 3 wirkt als ein Verbundwerkstoff und verknüpft die einzelnen katalytisch aktiven Komponenten sowohl untereinander als auch die katalytisch aktive Masse 10 mit dem Tragkörper 1. Um jeden Mikrokristallit des Aluminiumoxids 2 angeordnet sind die katalytisch aktiven Komponenten Titandioxid (TiO₂) 4 sowie Vanadinpentoxid (V₂O₅) 5 und Wolframtrioxid (WO₃) 6. Die jeweiligen katalytisch aktiven Komponenten 4, 5, 6 sowie das Aluminiumoxid 2 werden untereinander zusätzlich zu den Adhäsionskräften durch chemische Verbindungen aufgrund entstandener ternärer Oxide gehalten. Derartige Mischoxide führen zu einer hohen Abriebfestigkeit der katalytisch aktiven Masse 10. Damit verbunden ist eine lange Standzeit eines derartigen Katalysators.

## Patentansprüche

1. Verfahren zum Herstellen eines Katalysators mit einer katalytisch aktiven Masse (10) auf einem Tragkörper (1) mittels thermischem Spritzen, wobei ein einen reaktiven Vorläufer zumindest einer Komponente (4) der katalytisch aktiven Masse (10) umfassendes Spritzmaterial thermisch auf den Tragkörper (1) gespritzt und der reaktive Vorläufer zur Ausbildung der Komponente (4) umgesetzt wird,
**dadurch gekennzeichnet, daß** als reaktiver Vorläufer ein Titanhydroxid eingesetzt wird.

2. Verfahren nach Anspruch 1,
**dadurch geknnzeichnet**, daß als Titanhydroxid ein Titanmetahydroxid eingesetzt wird.

3. Verfahren nach Anspruch 1 oder 2,
**dadurch gekennzeichnet, daß** die Umsetzung des reaktiven Vorläufers durch eine thermische Aktivierung während des Spritzens und/oder nach erfolgtem Spritzen erfolgt.

4. Verfahren nach einem der Ansprüche 1 bis 3,
**dadurch gekennzeichnet, daß** ein weitere reaktive Vorläufer umfassendes Spritzmaterial eingesetzt wird.

5. Verfahren nach Anspruch 4,
**dadurch gekennzeichnet, daß** als ein weiterer reaktiver Vorläufer ein Metallsalz oder eine Hydroxyverbindung eines Metalls eingesetzt wird.

6. Verfahren nach Anspruch 4,
**dadurch gekennzeichnet, daß** als ein weiterer reaktiver Vorläufer ein Oxalat, ein Mitrat oder ein Carbonat eingesetzt wird.

7. Verfahren nach Anspruch 4,
**dadurch gekennzeichnet, daß** als ein weiterer reaktiver Vorläufer ein Aluminiumhydroxid, vorzugsweise ein Gibbsit oder ein Böhmit, eingesetzt wird.

8. Verfahren nach einem der Ansprüche 1 bis 7,
**dadurch gekennzeichnet, daß** ein ein Copräzipitat umfassendes Spritzmaterial eingesetzt wird.

9. Verfahren nach Anspruch 8,
**dadurch gekennzeichnet, daß** ein Wolfram und Titan umfassendes Copräzipitat eingesetzt wird.

10. Verfahren nach einem der Ansprüche 1 bis 8,
**dadurch gekennzeichnet, daß** der reaktive Vorläufer in einer Sauerstoff enthaltenden Atmosphäre umgesetzt wird.

11. Verfahren nach einem der Ansprüche 1 bis 10,
**dadurch gekennzeichnet, daß** parallel zum Spritzmaterial ein Metall oder eine Metallegierung thermisch gespritzt wird, wobei das Metall oder die Metallegierung und das Spritzmaterial während des Spritzens vor dem Auftreffen auf den Tragkörper (1) innig gemischt werden.

12. Verfahren nach Anspruch 11,
**dadurch gekennzeichnet, daß** als Metall Aluminum bzw. als Metallegierung eine Aluminiumlegierung parallel gespritzt wird.

13. Verfahren nach einem der Anspruche 1 bis 12,
**dadurch gekennzeichnet, daß** als Spritzmaterial eine Pulvermischung aus separaten Pulvern mit einer jeweiligen mittleren Korngröße von weniger als 50 µm, vorzugsweise von weniger als 10 µm, gespritzt wird.

## Claims

1. Process for producing a catalyst comprising a catalytically active composition (10) on a support body (1) by means of thermal spraying, where a spraying material comprising a reactive precursor of at least one component (4) of the catalytically active composition (10) is thermally sprayed onto the support body (1) and the reactive precursor is converted to form the component (4), **characterized in that** the reactive precursor used is a titanium hydroxide.

2. Process according to Claim 1, **characterized in that** the titanium hydroxide used is a titanium meta-hydroxide.

3. Process according to Claim 1 or 2, **characterized in that** the conversion of the reactive precursor is carried out by thermal activation during spraying and/or after spraying is completed.

4. Process according to any of Claims 1 to 3, **characterized in that** a spraying material comprising further reactive precursors is used.

5. Process according to Claim 4, **characterized in that** a metal salt or a hydroxy compound of a metal is used as a further reactive precursor.

6. Process according to Claim 4, **characterized in that** an oxalate, a nitrate or a carbonate is used as a further reactive precursor.

7. Process according to Claim 4, **characterized in that** an aluminium hydroxide, preferably a gibbsite or a boehmite, is used as a further reactive precursor.

8. Process according to any of Claims 1 to 7, **characterized in that** the spraying material used comprises a coprecipitate.

9. Process according to Claim 8, **characterized in that** the coprecipitate used comprises tungsten and titanium.

10. Process according to any of Claims 1 to 8, **characterized in that** the reactive precursor is converted in an oxygen-containing atmosphere.

11. Process according to any of Claims 1 to 10, **characterized in that** a metal or a metal alloy is thermally sprayed in parallel with the spraying material, with the metal or the metal alloy and the spraying material being intimately mixed during spraying before they impinge on the support body (1).

12. Process according to Claim 11, **characterized in that** the metal sprayed in parallel is aluminium or the metal alloy sprayed in parallel is an aluminium alloy.

13. Process according to any of Claims 1 to 12, **characterized in that** the spraying material which is sprayed is a powder mixture comprising separate powders each having a mean particle size of less than 50 µm, preferably less than 10 µm.

## Revendications

1. Procédé de préparation d'un catalyseur avec une masse catalytique active (10) sur un corps support (1) au moyen de pulvérisation thermique, où on pulvérise thermiquement sur le corps support (1) une matière de pulvérisation comportant un précurseur réactif d'au moins un composant (4) de la masse active catalytique (10) et le précurseur réactif est transformé pour la formation du composant (4), **caractérisé en ce qu'**on utilise comme précurseur réactif un hydroxyde de titane.

2. Procédé selon la revendication 1, **caractérisé en ce qu'**on utilise comme hydroxyde de titane un métahydroxyde de titane.

3. Procédé selon la revendication 1 ou 2, **caractérisé en ce que** la réaction du précurseur réactif a lieu par une activation thermique pendant la pulvérisation et/ou après la pulvérisation ayant eu lieu.

4. Procédé selon l'une quelconque des revendications 1 à 3,
**caractérisé en ce qu'**on utilise une matière de pulvérisation comportant un autre précurseur réactif.

5. Procédé selon la revendication 4, **caractérisé en ce qu'**on utilise comme autre précurseur réactif un sel métallique ou un composé hydroxylé d'un métal.

6. Procédé selon la revendication 4, **caractérisé en ce qu'**on utilise comme autre précurseur réactif un oxalate, un nitrate ou un carbonate.

7. Procédé selon la revendication 4, **caractérisé en ce qu'**on utilise comme autre précurseur réactif un hydroxyde d'aluminium, de préférence une gibbsite ou une böhmite.

8. Procédé selon l'une quelconque des revendications 1 à 7, **caractérisé en ce qu'**on utilise une matière de pulvérisation comprenant un co-précipité.

9. Procédé selon la revendication 8, **caractérisé en ce qu'**on utilise un co-précipité comprenant du tungstène et du titane.

10. Procédé selon l'une quelconque des revendications 1 à 8, **caractérisé en ce qu'**on utilise le précurseur réactif dans une atmosphère contenant un acide.

11. Procédé selon l'une quelconque des revendications 1 à 8, **caractérisé en ce qu'**on pulvérise thermiquement parallèlement à la matière de pulvérisation un métal ou un alliage métallique, le métal ou l'alliage métallique et la matière de pulvérisation étant mélangés intimement avant le dépôt sur le corps support (1).

12. Procédé selon la revendication 11, **caractérisé en ce qu'**on pulvérise parallèlement comme métal de l'aluminium, respectivement comme alliage métallique un alliage d'aluminium.

13. Procédé selon l'une quelconque des revendications 1 à 12, **caractérisé en ce qu'**on pulvérise comme matière de pulvérisation un mélange pulvérulent de poudres séparées avec une grosseur de particules moyenne chacune inférieure à 50 µm, de préférence inférieure à 10 µm.
